## Europäisches Patentamt

## European Patent Office

## Office européen des brevets

(19)

(11) Veröffentlichungsnummer: **0 020 668**
**B1**

(12)
# EUROPÄISCHE PATENTSCHRIFT

(45) Veröffentlichungstag der Patentschrift:
28.07.82

(21) Anmeldenummer: **80900003.7**

(22) Anmeldetag: **19.12.79**

(86) Internationale Anmeldenummer:
**PCT/DE 79/00149**

(87) Internationale Veröffentlichungsnummer:
**WO 80/01274 (26.06.80 Gazette 80/14)**

(51) Int. Cl.³: **C 03 C  3/12,** C 03 C  3/18,
C 03 C  3/30

(54) **VERFAHREN ZUM HERSTELLEN EINES BERYLLIUMFREIEN FLUOROPHOSPHATGLASES.**

(30) Priorität: **20.12.78  DE 2854936**

(43) Veröffentlichungstag der Anmeldung:
**07.01.81 Patentblatt 81/1**

(45) Bekanntmachung des Hinweises auf die Patenterteilung:
**28.07.82 Patentblatt 82/30**

(84) Benannte Vertragsstaaten:
**FR GB**

(56) Entgegenhaltungen:
**DE-C-945 408**
**FR-A-2 387 915**
**GB-A-1 405 717**
**GB-A-1 534 060**
**US-A-3 743 492**

**CHEMICAL ABSTRACTS, Band 83, Nummer 20,
17. November 1975 COLUMBUS, OHIO (US)
CHEMICAL ABSTRACTS, Band 87, Nummer 20,
14. November 1977 COLUMBUS, OHIO (US)**

(73) Patentinhaber: **ERNST LEITZ WETZLAR GMBH,
Ernst-Leitz-Strasse 30 Postfach 20 20,
D-6330 Wetzlar 1 (DE)**

(72) Erfinder: **BRÖMER, Heinz, Am Hundsrück 7,
D-6331 Hermannstein (DE)**
Erfinder: **MEINERT, Norbert, Am Sportfeld 5,
D-6336 Solms-Albshausen (DE)**

# Verfahren zum Herstellen eines berylliumfreien Fluorophosphatglases

Gegenstand der Erfindung ist ein Verfahren zum Herstellen eines Be-freien Fluorophosphatglases mit einer Brechzahl $n_e$ zwischen 1,40 und 1,46, einem Abbe-Wert $v_e$ zwischen 85 und 94 und einem hohen anomalen Teildispersionswert $+\Delta v_e$ zwischen 19 und 28.

Zur Korrektur des sogenannten «sekundären Spektrums» spezieller Optiken war der rechnende Optiker bislang auf die Mitverwendung von natürlichen oder synthetischen Kristallen, beispielsweise des Minerals Fluorit ($CaF_2$), angewiesen. Wegen der für eine moderne Fertigung unzureichenden Materialeigenschaften, wie vollkommene Spaltbarkeit nach den Oktaederflächen und die relativ geringe Härte, ist man seit jüngerer Zeit bestrebt, optische Gläser mit ähnlichen optisch-physikalischen Eigenschaften wie der kubische Fluorit, jedoch mit besseren chemischen und verfahrenstechnologischen Eigenschaften zu entwickeln. Dabei kommt es nicht nur auf die Parameter-Konstellation der Brechzahl $n_e$ (Fluorit: $n_e = 1,4349$) und des Abbe-Wertes $v_e$ (Fluorit: $v_e = 94,8$), sondern zusätzlich auf den anomalen Teildispersionswert $\Delta v_e$, ausgedrückt als Abweichung (positiv oder negativ) von der sogenannten «Normalgeraden», an. Dieser Wert beträgt bei Fluorit: $\Delta v_e = +31,5$.

Es sind bereits Gläser auf Fluorphosphatbasis bekannt, die zusätzlich positive anomale Teildispersionswerte aufweisen. In ihren $n_e$-$v_e$-Parameter-Paaren liegen sie jedoch sämtlich ausserhalb des erfindungsgemässen Bereiches. So ist aus der CA-PS 570 108 ein Glas mit den Werten $n_D = 1,38$ und $v = 95,5$, aus der US-PS 2 716 069 ein Fluoridglas mit $n_D = 1,35$ und $v = 81$, aus der GB-PS 845 952 ein Glas mit $n_d = 1,33$ und $v_e = 105$ und aus der US-PS 2 511 224 ein Fluoridglas mit $n_D = 1,39$ und $v_e = 99,5$ bekannt.

Abgesehen davon, dass sich die optischen Lage-Bereiche dieser Gläser im n-v-Diagramm von den nach dem erfindungsgemässen Verfahren hergestellten Gläsern unterscheiden, enthalten die bekannten Gläser ausnahmslos Berylliumfluorid $BeF_2$) als Glasbildner. Weger der Giftigkeit von Beryllium-Verbindungen ist bei Einsatz dieser Gemengekomponenten während des Schmelzvorganges und bei der späteren Glasbearbeitung die Gefahr einer Gesundheitsschädigung nicht auszuschliessen.

Zwar ist aus der DE-PS 1 088 674 ein alkali- und berylliumfreies, fluorhaltiges Phosphatglas bekannt, das zusätzlich auch noch geringe Beimengungen von $B_2O_3$ enthalten kann; die optischen Eigenschaften liegen aber bei Brechzahlen $n_d$ zwischen 1,536 und 1,589 und Abbe-Werten v zwischen 66,4 und 72,8 und somit in einem völlig anderen Gebiet des optischen Lageplans. Dies gilt auch für aus der DE-AS 2 342 484 bekannte Fluorphosphatgläser mit $n_e > 1,57$ und $v_e < 70$; für in der DE-PS 1 596 877 beschriebene Gläser mit $n_e$ zwischen 1,47 und 1,53 sowie $v_e$ zwischen 75 und 85 und für ein aus der DE-PS 1 496 566 bekanntes

optisches Glas mit $n_e$-Werten zwischen 1,53 und 1,55 sowie $v_e$-Werten zwischen 62 und 74.

Schliesslich sind auch bereits Fluorphosphatgläser beschrieben worden, die jedoch als weiteren Bestandteil u.a. $B_2O_3$ enthalten, vgl. die US-PS 3 656 976 ($n_e$: 1,47 bis 1,54; $v_d$: 84,2 bis 71,6) bzw. DE-OS 2 024 613 ($n_e$: 1,482, v: 84). Diese Gläser weisen jedoch, bedingt durch die Anwesenheit von $B_2O_3$, kleinere Abbe-Werte und höhere Brechzahlen auf.

Es ist daher die Aufgabe der vorliegenden Erfindung, ein Verfahren zur Herstellung solcher spezieller optischer Fluorophosphatgläser anzugeben, die die Nachteile der bekannten Gläser gleichen Typs nicht aufweisen.

Diese Aufgabe wird bei einem Verfahren der eingangs genannten Art erfindungsgemäss dadurch gelöst, dass ein Gemenge mit den folgenden Komponenten erschmolzen wird: Entweder 7 bis 15 Gew.-% $Al(PO_3)_3$ als alleinige Metaphosphat-Komponente oder für den Fall, dass anstelle des Aluminiummetaphosphates ein anderes Metaphosphat bzw. zusätzlich zum Aluminiummetaphosphat ein weiteres Metaphosphat tritt, 0 bis 15 Gew.-% $Al(PO_3)_3$ und/oder bis zu 11 Gew.-% eines Alkalimetaphosphates, insbesondere $NaPO_3$, bzw. 0 bis 15 Gew.-% Al ($PO_3)_3$ und bis zu 5 Gew.-% mindestens eines Erdalkalimetaphosphates, insbesondere Magnesiummetaphosphat ($Mg(PO_3)_2$), und/oder Calciummetaphosphat ($Ca(PO_3)_2$), wobei die Summe aller Metaphosphate zwischen 7 und 15 Gew.-% beträgt; 0 bis 6 Gew.-% Lithiumfluorid (LiF), 0 bis 12 Gew.-% Kaliumhydrogenfluorid ($KHF_2$), 3 bis 12 Gew.-% $MgF_2$, 9 bis 28 Gew.-% Calciumfluorid ($CaF_2$), 6 bis 16 Gew.-% Strontiumfluorid ($SrF_2$), 4 bis 13 Gew.-% Bariumfluorid ($BaF_2$), 22 bis 31 Gew.-% Aluminiumfluorid ($AlF_3$), wobei der Anteil der Erdalkalifluoride zwischen 23 und 52 Gew.-% beträgt, und 5 bis 29 Gew.-% Natriumfluoborat ($NaBF_4$). Zusätzlich können dem Gemenge bis zu 2 Gew.-% mindestens eines der folgenden Zuschlagstoffe zugegeben werden: Lanthanfluorid ($LaF_3$), Zinkfluorid ($ZnF_2$) und/oder Cadmiumfluorid ($CdF_2$).

Es ist vorteilhaft, die angegebenen Glasgemenge nach dem folgenden Verfahrensablauf zu erschmelzen: Erhitzen des durchmischten Gemenges in einem Platintiegel auf eine Temperatur zwischen 700 und 800°C; Läutern der Schmelze bei einer Temperatur zwischen 900 und 1000°C während einer Zeitdauer zwischen 8 und 25 Minuten; Homogenisieren der Schmelze bei einer Temperatur zwischen 900 und 1000°C innerhalb einer Zeitspanne zwischen 5 und 15 Minuten; Absenken auf Abgusstemperatur, die zwischen 575 und 650°C liegt; Abgiessen in auf etwa 320°C vorgewärmte Abgussformen, insbesondere solche aus Aluminium.

Durch das Einbringen der Bor-Ionen über die komplexe Verbindung $NaBF_4$ in die Schmelze wird die Bildung von $B_2O_3$ vermieden und damit der negative Einfluss der Borsäure (Borsäureanhydrid) auf die anomale Teildispersion verhindert. Ausserdem weisen die nach dem erfindungsgemässen Verfahren hergestellten Fluorophosphatgläser eine geringere Kristallisationsneigung auf und sind auch in grösseren Einheiten zu erschmelzen.

In den nachstehenden Tabellen sind Beispiele für Gemengezusammensetzungen nach der Erfindung aufgeführt (in Gew.-%).

Tabelle 1

| Schmelz-Nr. | 1 | 2 | 3 | 4 | 5 | 6 | 7 | 8 | 9 | 10 | 11 |
|---|---|---|---|---|---|---|---|---|---|---|---|
| $Al(PO_3)_3$ | 7,5 | 7,5 | 10,5 | 10,5 | 10,5 | – | 5,5 | 5,5 | 5,5 | 14,5 | 14,5 |
| $NaPO_3$ | – | – | – | – | – | 10,5 | 5,0 | – | – | – | – |
| $Mg(PO_3)_2$ | – | – | – | – | – | – | – | 5,0 | – | – | – |
| $Ca(PO_3)_2$ | – | – | – | – | – | – | – | – | 5,0 | – | – |
| LiF | 4,2 | 4,2 | 6,0 | 4,0 | 3,0 | – | – | – | – | – | – |
| $KHF_2$ | 7,2 | 6,2 | 8,0 | 6,0 | 5,0 | – | – | – | – | 9,0 | 12,0 |
| $MgF_2$ | 5,2 | 5,2 | 4,0 | 5,0 | 5,5 | 6,0 | 6,0 | 6,0 | 6,0 | 6,0 | 6,0 |
| $CaF_2$ | 11,8 | 11,8 | 9,2 | 11,6 | 12,8 | 24,0 | 24,0 | 24,0 | 24,0 | 24,0 | 24,0 |
| $SrF_2$ | 7,8 | 7,8 | 6,0 | 7,6 | 8,4 | 9,2 | 9,2 | 9,2 | 9,2 | 9,2 | 9,2 |
| $BaF_2$ | 5,7 | 5,7 | 4,5 | 5,5 | 6,0 | 6,5 | 6,5 | 6,5 | 6,5 | 6,5 | 6,5 |
| $AlF_3$ | 29,2 | 30,2 | 30,8 | 28,8 | 27,8 | 26,8 | 26,8 | 22,8 | 22,8 | 22,8 | 22,8 |
| $NaBF_4$ | 21,4 | 21,4 | 21,0 | 21,0 | 21,0 | 17,0 | 17,0 | 21,0 | 21,0 | 8,0 | 5,0 |
| $n_e$ | 1,4091 | 1,4098 | 1,4125 | 1,42225 | 1,4255 | 1,4302 | 1,4350 | 1,4383 | 1,4388 | 1,4515 | 1,4539 |
| $v_e$ | 93,71 | 93,90 | 92,58 | 90,99 | 90,79 | 89,24 | 89,76 | 88,93 | 88,93 | 87,17 | 86,57 |
| $\vartheta'_g$ | 0,4733 | 0,4720 | 0,4734 | 0,4760 | 0,4724 | 0,4713 | 0,4745 | 0,4743 | 0,4753 | 0,4762 | 0,4776 |
| $\Delta v_e$ | +27,8 | +27,0 | +26,6 | +26,9 | +24,9 | +21,9 | +24,7 | +23,7 | +24,3 | +23,3 | +23,6 |

Tabelle 2

| Schmelz-Nr. | 12 | 13 | 14 | 15 | 16 | 17 | 18 | 19 | 20 |
|---|---|---|---|---|---|---|---|---|---|
| $Al(PO_3)_3$ | 8,5 | 8,5 | 8,5 | 10,5 | 14,5 | 10,5 | 12,5 | 14,5 | 14,5 |
| $MgF_2$ | 12,0 | 6,0 | 6,0 | 6,0 | 3,9 | 6,0 | 6,0 | 5,1 | 5,7 |
| $CaF_2$ | 24,0 | 24,0 | 24,0 | 28,0 | 17,0 | 24,0 | 24,0 | 21,0 | 23,0 |
| $SrF_2$ | 9,2 | 15,2 | 9,2 | 9,2 | 6,4 | 9,2 | 9,2 | 8,0 | 8,8 |
| $BaF_2$ | 6,5 | 6,5 | 12,5 | 6,5 | 4,4 | 10,5 | 8,5 | 5,6 | 6,2 |
| $AlF_3$ | 22,8 | 22,8 | 22,8 | 22,8 | 24,8 | 22,8 | 22,8 | 24,8 | 24,8 |
| $NaBF_4$ | 17,0 | 17,0 | 17,0 | 17,0 | 29,0 | 17,0 | 17,0 | 21,0 | 17,0 |
| $n_e$ | 1,4321 | 1,4375 | 1,4412 | 1,4435 | 1,4451 | 1,4452 | 1,4505 | 1,4553 | 1,4559 |
| $v_e$ | 90,24 | 90,53 | 89,89 | 88,89 | 86,70 | 88,60 | 87,62 | 85,75 | 86,56 |
| $\vartheta'_g$ | 0,4725 | 0,4767 | 0,4774 | 0,4752 | 0,4739 | 0,4746 | 0,4755 | 0,4727 | 0,4750 |
| $\Delta v_e$ | +23,7 | +27,0 | +26,8 | +24,3 | +21,2 | +23,6 | +23,2 | +19,3 | +21,8 |

Dabei sind gruppenweise zunächst die Metaphosphat-Verbindungen aufgeführt. Die wichtigste Komponente dieser Gruppe ist das $Al(PO_3)_3$, das lediglich im Beispiel 6 fehlt und durch eine äquivalente Menge von $NaPO_3$ ausgetauscht wurde. Die Beispiele 7 bis 9 weisen $Al(PO_3)_3$ und zusätzlich ein weiteres Metaphosphat, nämlich $NaPO_3$ (Beispiel 7), $Mg(PO_3)_2$ (Beispiel 8) bzw. $Ca(PO_3)_2$ (Beispiel 9) auf. Durch diese partiellen Austausche innerhalb der Metaphosphat-Komponentengruppe kann eine gezielte Feineinstellung der jeweils gewünschten optischen Parameter ($n_e$, $v_e$, $+\Delta v_e$) erzielt werden.

Zur zweiten Gruppe gehören alle «einfachen» Fluoride, also Fluoride I-, II- und III-wertiger Metalle bzw. Hydrogenfluoride. Während das LiF und das $KHF_2$ wahlweise eingesetzt wurde – vgl. die Beispiele 6 bis 9, in denen einwertige einfache Fluoride gänzlich fehlen –, sind die Erdalkalifluoride des Mg, Ca, Sr und Ba essentielle Bestandteile dieser Gemenge-Gruppe, die gemeinschaftlich vorhanden sind. Dies gilt zusätzlich auch für das $AlF_3$, das dem Schmelzansatz in relativ konstanten Mengen zuzugeben ist. Auch hier hat es der Glaschemiker durch gezielte Wahl der einzelnen Komponenten in der Hand, gewünschte optische Werte einzustellen.

Die dritte essentielle Verbindung ist ein komplexes Natriumfluoborat, das in relativ weiten Grenzen zugegeben werden kann. Die Fluoborate sind die Salze der Fluoborsäure und lassen sich durch Auflösen der betreffenden Metalloxide, Metallhydroxide oder Metallcarbonate in wässriger Fluoborsäure ($HBF_4$) darstellen, vgl. Holleman-Wiberg «Lehrbuch der anorganischen Chemie», 40. bis 46. Auflage, Verlag Walter de Gruyter & Co, Berlin, 1958, Seiten 372 und 373, und sind komplexchemisch zu schreiben: $Me^x[BF_4]_x$ bzw. als «Komplexformel» (vgl. Holleman-Wiberg, das o.a. Zitat, Seite 159):

$$Me^x \begin{bmatrix} F \\ F\,B\,F \\ F \end{bmatrix}_x$$

wobei Me für «Metall» steht und x die Wertigkeit (x = I, II, ...) bezeichnet.

Schliesslich sind in der ersten Vertikalspalte der Tabellen die optischen Parameter der nach dem erfindungsgemässen Verfahren erhaltenen Gläser angegeben, und zwar

$n_e$ = Hauptbrechzahl

$v_e$ = Abbe-Zahl (Reziprok-Wert der Dispersion), wobei gilt:

$$v_e = \frac{n_e - 1}{n_{F'} - n_{C'}} \;;$$

$\vartheta'_g$ = (eigentliche) anomale Teildispersion, wobei gilt:

$$\vartheta'_g = \frac{n_g - n_{F'}}{n_{F'} - n_{C'}} \;,$$

dabei bedeuten die tief gestellten Indizes:

e = grüne Quecksilberlinie (546,07 nm),
g = blaue Quecksilberlinie (435,84 nm),
F' = blaue Cadmiumlinie (479,99 nm),
C' = rote Cadmiumlinie (643,85 nm),
+ $\Delta v_e$ = positiver anomaler Teildispersionswert. Dieser Glas-Parameter ist wie folgt definiert: Trägt man in ein Diagramm, dessen Abszisse die $v_e$-Werte und dessen Ordinate die $\vartheta'_g$-Werte darstellen, sogenannte «normale» optische Gläser ein, so liegen diese auf einer Geraden, der sogenannten «Normalgeraden». Optische Gläser mit «anomalem» Dispersionsverhalten weichen demgegenüber in definierter Weise von dieser Normalgeraden ab. So haben die erfindungsgemässen Gläser bei einem gegebenen $\vartheta'_g$-Wert einen höheren $v_e$-Wert als «normale» Gläser. Die Differenz zwischen dem jeweiligen $v_e$-Wert eines Glases mit normalem Dispersionsverhalten einerseits und dem jeweiligen $v_e$-Wert der erfindungsgemässen Gläser andererseits wird üblicherweise mit «$\Delta v_e$» angegeben. Im vorliegenden Fall ist die Differenz positiv, so dass das vervollständigte Symbol lautet:

«+ $\Delta v_e$».

Das Verfahren zur Herstellung des erfindungsgemässen berylliumfreien, borhaltigen Fluorophosphatglases wird anhand des folgenden Schmelzbeispiels näher erläutert:

Eine Einwaage von 2 kg, die aus

10,5 Gew.-% $Al(PO_3)_3$
4,0 Gew.-% LiF
6,0 Gew.-% $KHF_2$
5,0 Gew.-% $MgF_2$
11,6 Gew.-% $CaF_2$
7,6 Gew.-% $SrF_2$
5,5 Gew.-% $BaF_2$
28,8 Gew.-% $AlF_3$
21,0 Gew.-% $NaBF_4$

besteht, wird nach intensiver Durchmischung portionsweise in einen auf 750°C vorgeheizten Platintiegel eingelegt. Nach dem Einschmelzen des Gemengesatzes wird die Schmelze bei 950°C 10 Minuten geläutert, sodann bei gleicher Temperatur weitere 10 Minuten unter ständigem Umrühren homogenisiert, dann auf die notwendige Abgusstemperatur von 600°C heruntergefahren und in eine auf 320°C vorgewärmte Aluminiumform abgegossen.

Die optischen Parameter des nach obigem Verfahren erschmolzenen Glases sind:

$n_e$    =    1,4225
$v_e$    =    90,99
$\vartheta'_g$    =    0,4760
$\Delta v_e$    = +26,9

Die während des gesamten Schmelzvorganges einzuhaltenden einzelnen Zeit- und Temperatur-Intervalle variieren naturgemäss in Abhängigkeit von der jeweils gewählten konkreten Einwaage. Sie liegen jedoch für die angegebenen Rezepturen innerhalb der folgenden Intervalle: Der Temperaturbereich des vorgewärmten Platintiegels liegt zwischen 700 und 800°C; die Schmelze wird dann bei einer Temperatur zwischen 900 und 1000°C in einer Zeit von 8 bis 25 Minuten geläutert; sodann bei dem gleichen Temperaturintervall innerhalb einer Zeitspanne zwischen 5 und 15 Minuten unter ständigem Umrühren homogenisiert; danach auf eine Abgusstemperatur zwischen 575 und 650°C gesenkt und schliesslich in eine auf ungefähr 320°C vorgewärmte Abgussform gegossen.

Wie in der Glastechnologie bekannt, liegt es im Rahmen der vorliegenden Erfindung, bis zu 2 Gew.-% untergeordnete Zuschlagstoffe, wie $LaF_3$, $ZnF_2$ und/oder $CdF_2$, die den Schmelzvorgang chemisch-technologisch günstig beeinflussen, hinzuzusetzen.

Die in den Tabellen aufgeführten Beispiele sind als repräsentative Ausführungsbeispiele anzusehen. Darüber hinaus sind alle durch die Intervall-Bereiche im Hauptanspruch gedeckten Gewichts-%-Werte für die angegebenen Komponenten sowie für chemisch gleichwirkende Verbindungen bzw. Anionen bzw. Kationen für den angestrebten Erfolg einsetzbar.

## Patentansprüche

1. Verfahren zum Herstellen eines berylliumfreien Fluorophosphatglases mit einer Brechzahl $n_e$ zwischen 1,40 und 1,46, einem Abbe-Wert $v_e$ zwischen 85 und 94 und einem hohen positiven anomalen Teildispersionswert $+\Delta v_e$ zwischen 19 und 28, dadurch gekennzeichnet, dass es aus einem Gemenge mit den folgenden Komponenten erschmolzen wird:
   a) Metaphosphat(e):
entweder
7 bis 15 Gew.-% $Al(PO_3)_3$ allein
oder
0 bis 15 Gew.-% $Al(PO_3)_3$ und/oder bis zu 11 Gew.-% eines Alkalimetaphosphates, insbesondere $NaPO_3$,
bzw.
0 bis 15 Gew.-% $Al(PO_3)_3$ und bis zu 5 Gew.-% mindestens eines Erdalkalimetaphosphates, insbesondere $Mg(PO_3)_2$ und/oder $Ca(PO_3)_2$,
wobei die Summe aller Metaphosphate zwischen 7 und 15 Gew.-% beträgt;
   b) Fluoride:
0 bis 6 Gew.-% LiF
0 bis 12 Gew.-% $KHF_2$
3 bis 12 Gew.-% $MgF_2$
9 bis 28 Gew.-% $CaF_2$
6 bis 16 Gew.-% $SrF_2$
4 bis 13 Gew.-% $BaF_2$
22 bis 31 Gew.-% $AlF_3$
wobei der Anteil der Erdalkalifluoride zwischen 23 und 52 Gew.-% beträgt; und
   c) Alkalifluoborat
5 bis 29 Gew.-% $NaBF_4$.

2. Verfahren nach Anspruch 1, dadurch gekennzeichnet, dass dem Gemenge zusätzlich bis zu 2 Gew.-% mindestens eines der nachfolgenden Zuschlagstoffe zugegeben wird:
$LaF_3$, $ZnF_2$ und/oder $CdF_2$.

3. Verfahren nach Anspruch 1 und 2, gekennzeichnet durch die folgenden Verfahrensschritte:
   a) Erhitzen des durchmischten Gemenges auf eine Temperatur zwischen 700 und 800°C;
   b) Läutern der Schmelze bei einer Temperatur zwischen 900 und 1000°C während einer Zeitdauer zwischen 8 und 25 Minuten;
   c) Homogenisieren der Schmelze bei einer Temperatur zwischen 900 und 1000°C innerhalb einer Zeitspanne zwischen 5 und 15 Minuten;
   d) Absenken auf eine zwischen 575 und 650°C liegende Abgusstemperatur;
   e) Abgiessen in auf etwa 320°C vorgewärmte Abgussformen, insbesondere solche aus Aluminium.

## Claims

1. Process for the production of a fluorophosphate glass free of beryllium and having a refractive index $n_e$ between 1,40 and 1,46, an Abbe value $v_e$ between 85 and 94 and a high positive anomalous partial dispersion co-efficient $+\Delta v_e$ between 19 and 28, characterised thereby, that it is melted from a frit with the following components:
   a) metaphosphate(s):
either 7 to 15% by weight of $Al(PO_3)_3$ on its own or 0 to 15% by weight of $Al(PO_3)_3$ and/or up to 11% by weight of an alkali metaphosphate, particularly $NaPO_3$ or 0 to 15% by weight of $Al(PO_3)_3$ and up to 5% by weight of at least one alkaline earth metaphosphate, particularly $Mg(PO_3)_2$ and/or $Ca(PO_3)_2$, wherein the sum of all metaphosphates amounts to between 7 and 15% by weight;
   b) fluorides:
0 to 6% by weight of LiF
0 to 12% by weight of $KHF_2$
3 to 12% by weight of $MgF_2$
9 to 28% by weight of $CaF_2$
6 to 16% by weight of $SrF_2$
4 to 13% by weight of $BaF_2$
22 to 31% by weight of $AlF_3$,
wherein the proportion of the alkaline earth fluorides amounts to between 23 and 52% by weight, and
   c) alkali fluoroborate:
5 to 29% by weight of $NaBF_4$.

2. Process according to claim 1, characterised thereby, that at least one of the following additives $LaF_3$, $ZnF_2$ and/or $CdF_2$ is additionally added by up to 2% by weight to the frit.

3. Process according to claims 1 and 2, characterised by the following process steps:
   a) heating of the intermixed frit to a temperature between 700° and 800°C,
   b) clarifying the melt at a temperature between 900° and 1000°C during a time interval of between 8 and 25 minutes,
   c) homogenizing the melt at a temperature between 900° and 1000°C within a time interval of between 5 and 15 minutes,
   d) lowering to a pouring temperature lying between 575° and 650°C and
   e) casting into casting moulds, particularly such of aluminium, preheated to about 320°C.

## Revendications

1. Procédé de préparation d'un verre fluorophosphate sans traces de béryllium, présentant un indice de réfraction $n_e$ compris entre 1,40 et 1,46, un nombre d'Abbé $v_e$ compris entre 85 et 94 et un taux de dispersion anomale positif $+\Delta v_e$ élevé, compris entre 19 et 28, caractérisé en ce qu'il est obtenu par fusion d'un mélange comprenant les composants suivants:
   a) métaphosphate(s):
soit
7 à 15% en poids d'$Al(PO_3)_3$ seul
soit
0 à 15% en poids d'$Al(PO_3)_3$ et/ou jusqu'à 11% en poids d'un métaphosphate alcalin, notamment $NaPO_3$,
ou
0 à 15% en poids d'$Al(PO_3)_3$ et jusqu'à 5% en poids d'au moins un métaphosphate d'alcalino-terreux, notamment Mg(PO₃)₂ et/ou Ca(PO₃)₂, la somme de tous les métaphosphates étant comprise entre 7 et 15% en poids;

b) fluorures:

0 à 6% en poids de LiF
0 à 12% en poids KHF₂
3 à 12% en poids MgF₂
9 à 28% en poids CaF₂
6 à 16% en poids SrF₂
4 à 13% en poids BaF₂
22 à 31% en poids AlF₃

la part des fluorures d'alcalino-terreux étant compris entre 23 et 52% en poids; et

c) Fluoborate alcalin:

5 à 29% en poids NaBF₄.

2. Procédé selon la revendication 1, caractérisé en ce que l'on ajoute supplémentairement jusqu'à 2% en poids au moins d'un des additifs suivants:

LaF₃, ZnF₂ et/ou CdF₂.

3. Procédé selon l'une des revendications 1 et 2, caractérisé par les opérations de procédé suivantes:

a) chauffement du mélange entremélangé à une température comprise entre 700 et 800°C;

b) épuration de la fusion à une températur comprise entre 900 et 1000°C, pendant une durée de temps entre 8 et 25 minutes;

c) homogénéisation de la fusion à une température entre 900 et 1000°C dans un intervalle de temps entre 5 à 15 minutes;

d) abaissement ou refroidissement à une température de coulée comprise entre 575 et 650°C;

e) coulée dans des moules de coulée préchauffés à environ 320°C, notamment dans des moules en aluminium.